# EUROPEAN PATENT APPLICATION

(11) **EP 0 885 583 A1**
(43) Date of publication of application: **23.12.1998**
(21) Application number: 97304257.5
(22) Date of filing: 18.06.1997
(51) Int. Cl.: A47J 36/38

(54) **Air treatment system**

(71) Applicant: Tege Patents Aktiengesellschaft, 9497 Triesenberg (LI)
(72) Inventor: Fergusson, Robin Julian, Royston, Hertfordshire (GB); Newman, Michael John, Hunsdon, Ware, Hertfordshire (GB)
(74) Representative: Brunner, Michael John

(57) **Abstract**

An air treatment system and method for a catering machine which includes an oil cooking device are disclosed. The treatment system has a system air inlet 70 through which ambient air is supplied to a cooking device 6 which has an air inlet 73 for removal of cooking process air and water vapour from the cooking device. A grease filter 76, for removing particles of grease and water droplets entrained in the process air removed from the cooking device, has an inlet connected to the cooking process air inlet and an outlet. A heat exchanger/condenser 79, for cooling process air and condensing water vapour, has a cooking process air inlet connected to the grease filter outlet, a cooking process air outlet 83, and a condensate outlet 80. A condensate reservoir 81 is connected to the condensate outlet. A filter assembly 85, for treating and reducing or removing odours from the cooking process air, has an inlet connected to the cooking process air outlet of the heat exchanger/condenser and an outlet. A process air fan 75 moves process air through the system and has an inlet connected to the outlet of the filter assembly and an outlet from which process air is removed from the system through a system air outlet 94.

## Description

The present invention relates to an air treatment system and method particularly for use in a catering machine which includes an oil cooking device. More specifically, the system is for use in catering machines in which a fluent food material is extruded into a plurality of individual segments prior to cooking. Specifically, the system of the present invention may relate to an automatic vending machine for vending a fried potato product.

Cooking food material with hot oil poses a number of problems, particularly in a catering machine such as a vending machine used for cooking a rehydrated food material such as powdered potato. One particular problem arises from the fact that, during the cooking process, considerable quantities of water vapour are produced as the rehydrated product is cooked in the oil. If the water vapour is simply allowed to condense in an uncontrolled manner then not only will it affect the operation of the catering machine, but also, if the water vapour is emitted from the catering machine into the room in which it is located, the atmosphere within that room may become unpleasantly humid. Furthermore, cooking oil vapours and droplets (or particles) are given off by the hot oil which are unpleasant to smell and which, if allowed to accumulate in the space around the catering machine, may discourage customers. The oil vapours and particles may be carried by the water vapour during actual cooking and may also be given off during periods when no cooking is actually taking place.

Accordingly, there is a need to control vapour emission during the operation of such a machine in order to remove undesirable water vapour and volatile oil vapours.

According to the present invention there is provided an air treatment system for use in a catering machine which includes an oil cooking device, the air treatment system comprising
a system air inlet through which ambient air is supplied to the system;
a cooking process air inlet for removal of cooking process air and water vapour from the cooking device;
a grease filter having an inlet connected to the cooking process air inlet and an outlet, for removing particles of grease and water droplets entrained in the process air removed from the cooking device;
a heat exchanger/condenser having a cooking process air inlet connected to the grease filter outlet, a cooking process air outlet, and a condensate outlet, for cooling process air and condensing water vapour therefrom;
a condensate reservoir connected to the condensate outlet for collection of condensate therein;
a filter assembly having an inlet connected to the cooking process air outlet of the heat exchanger/condenser and an outlet, for treating and reducing or removing odours from the cooking process air; and
a process air fan for moving process air through the system, having an inlet connected to the outlet of the filter assembly and an outlet from which process air is removed from the system through a system air outlet.

The invention also includes a method of treating air in a catering machine, the method comprising
drawing ambient air into the machine through a system air inlet;
removing cooking process air and water vapour from the cooking device;
passing the removed cooking process air and water vapour through a grease filter thereby removing particles of grease and water droplets entrained in the process air;
passing the removed air and water vapour from the grease filter through a heat exchanger/condenser, to cool the process air and condense water for the water vapour to form a condensate;
collecting the condensate in a reservoir;
passing the cooking process air from the heat exchanger/condenser through a filter assembly to treat and reduce or remove odours from the cooking process air; and,
removing cooking process air from the machine.

Preferably, the system includes an inlet air filter connected to the system air inlet, from which air flows to the remainder of the system.

The heat exchanger/condenser may be air-cooled, and the system include a cooling air fan receiving ambient air from the system air inlet, with the heat exchanger/condenser having a cooling air inlet connected to the cooling fan and a system air outlet.

Cooled, dehumidified and filtered cooking process air may be fed from the process air fan to the cooling air inlet of the heat exchanger/condenser, whereby process air and cooling air are removed together from the system through the system air outlet. This mixes relatively high volumes of low relative humidity air with relatively low volumes of high relative humidity air, reducing the risk of condensation outside the vending machine.

The cooking process air may be fed to the filter assembly from the cooking process air outlet of the heat exchanger/condenser through a first inlet of a duct, a second inlet being arranged to receive ambient air from the system air inlet. This may help, depending on the cooking load of the machine, to improve efficiency of the filter assembly and prevent clogging.

The invention also includes a catering machine in which, as a safety measure, the condensate reservoir includes a level sensor arranged to provide an output signal when the level of condensate therein reaches a predetermined level, and a control unit arranged to control the cooking process, the control unit being arranged to receive the condensate level output signal and, on receipt, prevent processing of additional food material.

Additionally, as a further safety measure, a flow sensor may be provided in the process air flow to the filter assembly to provide an output signal when a predetermined low flow level is sensed (indicating blockage of the filter assembly), the control unit being arranged to receive the flow sensor output signal and, on receipt, prevent processing of additional food.

One example of an air treatment system according to the present invention and its method of operation will now be described with reference to the accompanying drawings in which:
Figure 1 is a diagrammatic front view of a vending machine for cooking rehydrated potato;
Figure 2 is a diagrammatic view of the vending machine of Figure 1, from the left side of Figure 1;
Figure 3 is a diagrammatic view of the vending machine of Figure 1, from the right side of Figure 1; and,
Figure 4 is a schematic of an air treatment system according to the present invention employed in the vending machine of Figure 1.

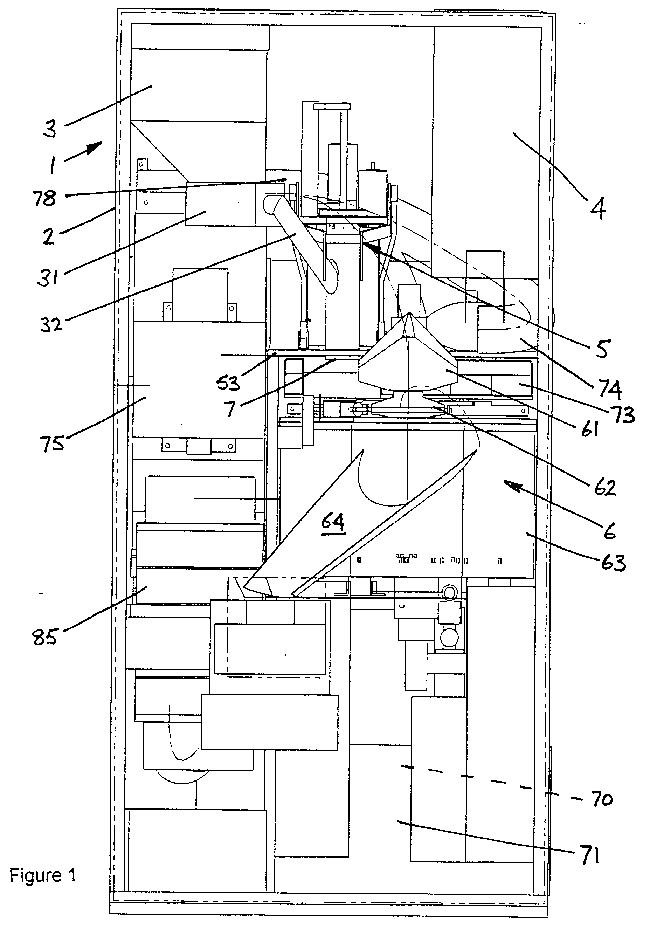

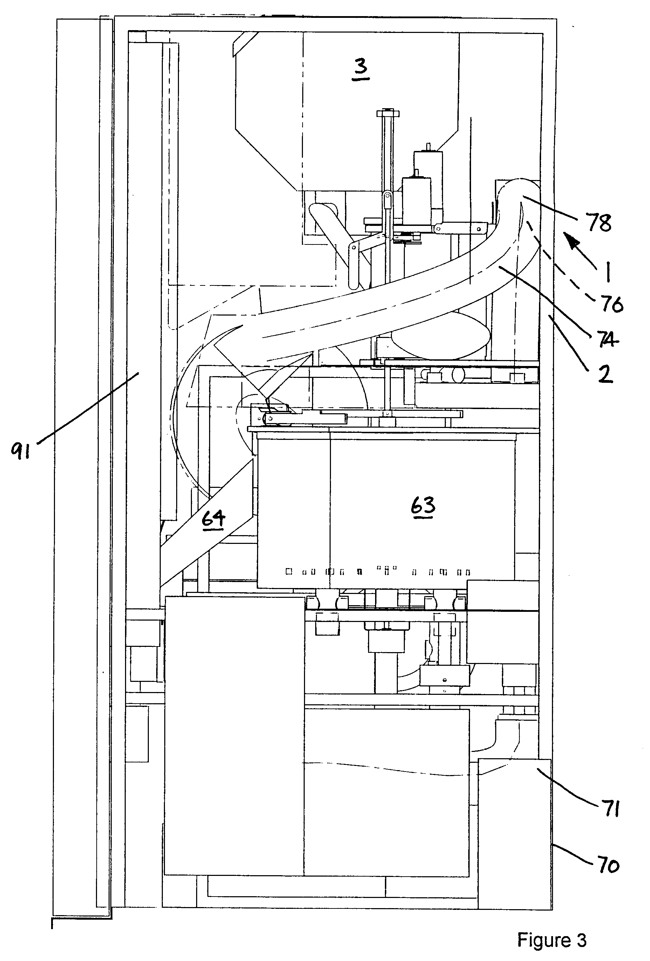

The catering machine 1 shown in Figures 1 to 3 is a vending machine designed for dispensing orders of potato chips (french fries) and includes a casing 2 within which all the operative components of the vending machine are disposed. Although it is not necessary for an understanding of the present invention, the vending machine will be briefly described. The vending machine includes a hopper 3 for containing a powdered potato product and a dispenser 4 of condiments such as tomato sauce in miniature pots or otherwise suitably packaged, and which are dispensed separately or with the chips. Water is fed from a mains supply. The powdered potato product is fed, via means of an auger system 31, and water from the mains supply is fed via a suitable pressure and flow control mechanism, which includes a pump, flow and pressure regulators and flow control valves (none of which are shown), to a rehydration and extrusion apparatus 5 which is described in more detail in our co-pending application reference MJB05712EP. A sliding gate valve 7 closes off the bottom of the rehydration and extrusion apparatus.

From the rehydration and extrusion apparatus rehydrated potato mix is extruded into one of four cooking baskets 61 which form part of a cooking station 6. The cooking station 6 includes a housing 63 in which is disposed a vessel providing a bath of cooking oil which is heated to the desired temperature by external heater bands (not shown). Individual portions of potato chips or french fries are extruded into the cooking baskets 61 for cooking within the oil bath. The individual baskets are rotated on a carrousel 62 and after having been cooked for the desired length of time the respective cooking basket is pivoted out of the cooking oil to deposit the portion of chips onto a delivery chute 64 from where it is dispensed at the front of the vending machine into cups provided from a cup supply mechanism (not shown) to the user.

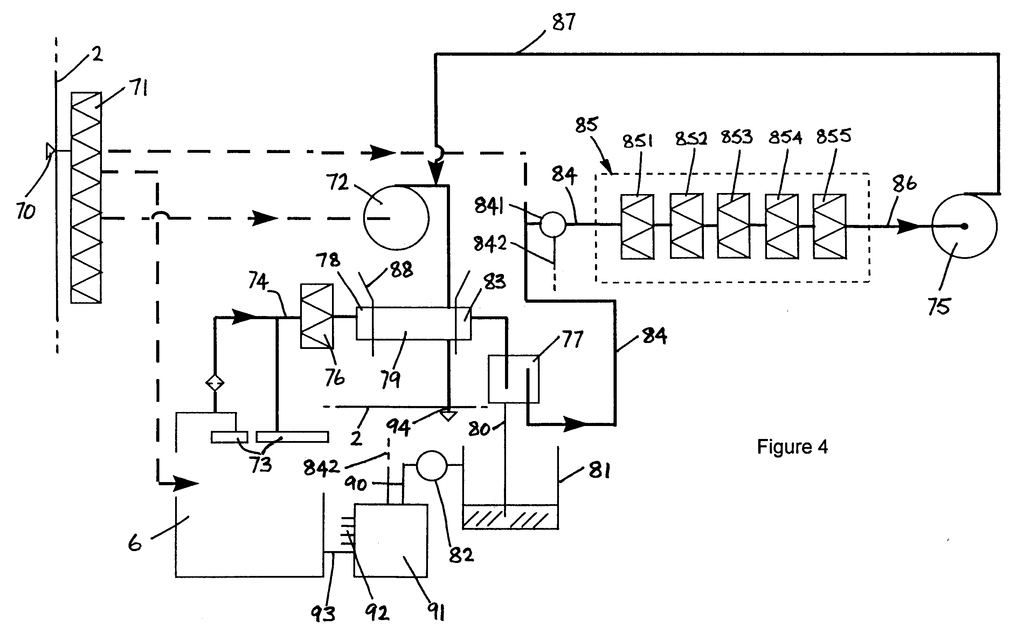

Although many of the components of the air treatment system can be seen in Figures 1 to 3, the operation of the air treatment system of this example will be better understood by reference to the schematic of Figure 4, to which reference is now made specifically in the following description. The casing 2 of the vending machine incorporates an air inlet 70 positioned low on the back of the casing 2 and, immediately adjacent to the air inlet 70, there is provided an inlet air filter 71 which filters particles of dust etc. from the ambient air incoming to the machine. Air for cooling purposes is drawn through the filter by a cooling air fan 72 and a further portion of the air drawn through the filter 71 passes to the area of the cooking station 6. During the cooking process the air is heated and, together with water droplets and water vapour evaporated from the oil and rehydrated potato, this air is then drawn through a pair of hoods 73, one at the front and one at the back of the cooking station 6, into a duct 74. The hot cooking process air, water droplets, and water vapour are drawn through the duct 74 by a process air fan 75, preferably a multi-stage centrifugal fan, and pass initially through a grease filter 76 disposed in the duct 74 and thence, to a cooking process air inlet 78 of a heat exchanger/condenser 79.

From an outlet 83, at the bottom of the heat exchanger/condenser 79, cooled cooking process air and water condensate pass into a condensate separator 77 from which the condensate flows through a pipe 80 under gravity into a reservoir 81 which has a level sensor 82. Air cooled in the heat exchanger 79 is then drawn from the condensate separator via a duct 84. A low air flow sensor 841 is used to sense the flow through the duct 84 and, if it is too low, issue a signal on line 842 to a control unit 91 to stop any further orders being processed until the flow rate has returned to normal. The cooled cooking process air is drawn through a filter assembly 85 which includes a number of filter stages 851-855 including an oil mist and particle removal filter, activated carbon filter stages 852, 854, and potassium permanganate stages 853, 855.

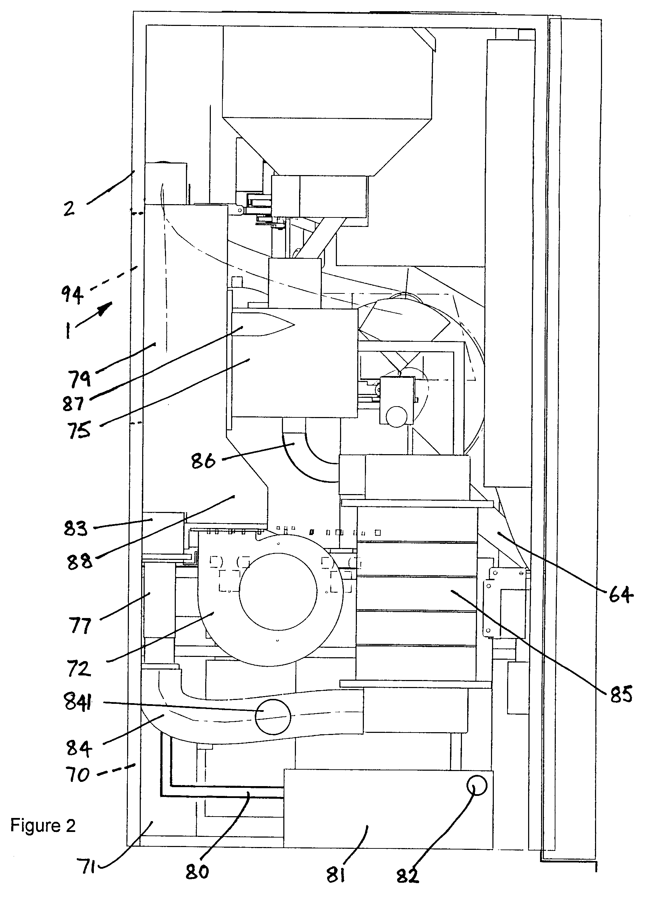

From the filter assembly 85 the air is drawn through a duct 86 to the process air fan 75 and from the process air fan the air is passed through a duct 87 into the cooling air inlet 88 of the heat exchanger 79. The cooling air inlet 88 is formed as a plenum chamber as can best be seen in Figure 2. The process air and cooling air from the output side of the cooling air fan 72 are mixed in the plenum chamber 88 and pass together through the heat exchanger 79 to cool the hot process air flowing from the cooking area 6 and to condense the water vapour, and the combined air flow is then directed out of the casing of the vending machine through a grill indicated at 94.

A portion of the ambient air drawn in through the inlet filter 71 is also drawn directly into the duct 84 (by-passing the cooking station 6 and heat exchanger/condenser 79) through appropriately sized orifices (not shown) by the process air fan 75, and through the filter assembly 85. This "by-pass" flow, the ratio of which to the flow through the heat exchanger/condenser is controlled by the size and number of orifices, provides the advantage that the humidity of the process air passing through the filter assembly 85 is lowered, which reduces or eliminates the risk of saturating or poisoning the filters, increasing the efficiency of the filter assembly. Although water vapour is condensed in the heat exchanger/condenser 79, not all of the water vapour produced by the cooking process can be so condensed and thus a portion remains to be passed through the filter assembly 85. By drawing in additional air the humidity is reduced and, when cooking is not actually taking place, ambient air and hot air from the hoods 73 drawn in through the duct 84 serve to remove absorbed water from within the filter assembly 85 without the need for controlling valves or the like.

An output on signal line 90 from the level sensor 82 is fed to a control unit 91 of the vending machine which has various outputs 92,93 which control particular functions of the vending machine. An output from the level sensor 82, indicating that the level of condensate in the reservoir 81 has reached a predetermined upper level, is used to stop any further orders being processed until the condensate has been removed, as indicated schematically by the signal line from the control unit 91. Similarly, as mentioned above, an output from the flow sensor 841 is also operative in the same manner through the control unit 91 to stop any further orders being processed. In practice multiple signal outputs 92,93 will be generated on receipt by the control unit 91 of the output signals from the level sensor 82 on line 90 or from the flow sensor 841 on line 842 to shut down selected components of the vending machine temporarily, eg. delivery of further food material to the cooking station as indicated schematically by the line 93.

The reservoir 81 is removable by a service operator in order to remove condensate from the vending machine at suitable intervals.

## Claims

1. An air treatment system for use in a catering machine, which includes an oil cooking device, the treatment system comprising
a system air inlet through which ambient air is supplied to the system;
a cooking process air inlet for removal of cooking process air and water vapour from the cooking device;
a grease filter having an inlet connected to the cooking process air inlet and an outlet, for removing particles of grease and water droplets entrained in the process air removed from the cooking device;
a heat exchanger/condenser having a cooking process air inlet connected to the grease filter outlet, a cooking process air outlet, and a condensate outlet, for cooling process air and condensing water vapour therefrom;
a condensate reservoir connected to the condensate outlet for collection of condensate therein;
a filter assembly having an inlet connected to the cooking process air outlet of the heat exchanger/condenser and an outlet, for treating and reducing or removing odours from the cooking process air; and
a process air fan for moving process air through the system, having an inlet connected to the outlet of the filter assembly and an outlet from which process air is removed from the system through a system air outlet.

2. A system according to claim 1, further comprising an inlet air filter connected to the system air inlet.

3. A system according to claim 1 or claim 2, wherein the heat exchanger/condenser is air-cooled, and further comprising a cooling air fan receiving ambient air from the system air inlet.

4. A system according to claim 3, wherein the heat exchanger/condenser has a cooling air inlet connected to the cooling fan and a system air outlet.

5. A system according to claim 4, wherein cooled, dehumidified and filtered cooking process air is fed from the process air fan to the cooling air inlet of the heat exchanger/condenser, whereby process air and cooling air are removed together from the system through the system air outlet.

6. A system according to any of claims 1 to 5, wherein the cooking process air is fed to the filter assembly from the cooking process air outlet of the heat exchanger/condenser through a first inlet of a duct, the duct having a second inlet arranged to receive ambient air from the system air inlet, and an outlet to the filter assembly.

7. A system according to any of claims 1 to 6, wherein the filter assembly includes an oil mist removal stage.

8. A system according to any of claims 1 to 7, wherein the filter assembly includes an activated carbon filter stage.

9. A system according to any of claims 1 to 8, wherein the process air inlet includes a hood arranged to surround the cooking device at least partially in use.

10. A system according to any of claims 1 to 9, wherein the condensate reservoir includes a level sensor arranged to provide an output signal if the level of condensate therein reaches a predetermined level.

11. A system according to any of claims 1 to 10, further including a flow sensor arranged to provide an output signal if the speed of flow of the process air to the filter assembly drops to a predetermined low level.

12. A catering machine comprising an oil cooking device; and an air treatment system according to any of claims 1 to 11.

13. A catering machine according to claim 12, wherein the machine includes a control unit arranged to control the cooking process, the control unit being arranged to receive the condensate level output signal and, on receipt, prevent processing of additional food material.

14. A catering machine according to claim 12, wherein the machine includes a control unit arranged to control the cooking process, the control unit being arranged to receive the flow sensor output signal and, on receipt, prevent processing of additional food material.

15. A method of treating air in a catering machine which includes an oil cooking device, the method comprising
drawing ambient air into the machine through a system air inlet;
removing cooking process air and water vapour from the cooking device;
passing the removed cooking process air and water vapour through a grease filter thereby removing particles of grease and water droplets entrained in the process air;
passing the removed air and water vapour from the grease filter through a heat exchanger/condenser, to cool the process air and condense water for the water vapour to form a condensate;
collecting the condensate in a reservoir;
passing the cooking process air from the heat exchanger/condenser through a filter assembly to treat and reduce or remove odours from the cooking process air; and,
removing cooking process air from the machine.

16. A method according to claim 15, wherein the heat exchanger/condenser is air cooled and ambient cooling air is passed through the heat exchanger/condenser via a cooling air inlet thereof and removed from a system air outlet connected to a cooling air outlet of the heat exchanger/condenser.

17. A method according to claim 16, wherein the cooking process air from the filter assembly is passed to the cooling air inlet of the heat exchanger/condenser and removed together with the cooling air from the cooling air outlet of the heat exchanger/condenser.

18. A method according to any of claims 15 to 17, wherein ambient air from the system air inlet is fed directly to the filter assembly together with the cooking process air fed from the heat exchanger/condenser.

19. A method according to any of claims 15 to 17, further including sensing the level of condensate in the reservoir and providing an output signal at a predetermined level.

20. A method according to any of claims 15 to 19, further including sensing the speed of flow of process air to the filter assembly and providing an output signal at a predetermined low speed.

21. A method of operating a catering machine which includes a control unit arranged to control the cooking process, the method including treating air according to claim 19 or claim 20 and passing the output signal to the control unit which, on receipt of the output signal, prevents processing of additional food material.
